# EUROPEAN PATENT APPLICATION

(11) **EP 4 803 708 A1**
(43) Date of publication of application: **09.09.2026**
(21) Application number: 26162931.5
(22) Date of filing: 06.03.2026
(51) Int. Cl.: E02F 9/22, E21B 7/02

(54) **FLOAT AND OSCILLATION CIRCUIT FOR A MOBILE MACHINE**

(30) Priority: 07.03.2025 US 202519073777
(71) Applicant: Joy Global Surface Mining Inc, Milwaukee, Wisconsin 53204 (US)
(72) Inventor: SEEGER, Douglas, Franksville, 53102 (US)
(74) Representative: Appleyard Lees IP LLP

(57) **Abstract**

A mobile machine (100) includes a frame (104), a plurality of crawlers (108) coupled to the frame, a plurality of actuators (118) operably coupled to the plurality of crawlers (108), and a fluid circuit (122) configured to supply a working fluid to each actuator (118) of the plurality of actuators. The fluid circuit (122) includes a plurality of hard plumbed sub-circuits (402) and a floating sub-circuit (428). The plurality of hard plumbed sub-circuits (402) are connected to the plurality of actuators (118) to allow flow of the working fluid to and from the plurality of actuators (118). The floating sub-circuit (428) interconnects the plurality of actuators (118) and allows the working fluid to flow between the plurality of actuators (118). The floating sub-circuit (428) includes floating valves (430) that control the flow of the working fluid in the floating sub-circuit (428) independent of the flow of the working fluid in the plurality of hard plumbed sub-circuits (402).

## Description

### TECHNICAL FIELD

The present disclosure relates to mobile machines, such as mobile drilling machines.

### BACKGROUND

Some drilling machines include a pair of crawlers that move the machine across the ground surface. The crawlers may encounter changes in contour of the ground surface that can impact the stability of the machine. Hydraulic actuators may enable the crawlers to traverse a ground surface and keep the machine level.

### SUMMARY

Embodiments described herein provide a fluid circuit supplying working fluid, e.g., hydraulic fluid or pressurized fluid, to actuators for a set of crawlers of a machine, such as a drilling machine. The fluid circuit may include hard plumbed sub-circuits controlling flow of the working fluid to and from the actuators. The actuators may be interconnected via a floating sub-circuit that allows working fluid to oscillate between the actuators independent of the hard plumbed sub-circuits. The working fluid can oscillate in the floating sub-circuit to maintain the crawlers on a ground surface and to float the actuators as the machine traverses a terrain, which can improve stability and alleviate stress on the frame. The floating sub-circuit can be used in conjunction with the hard plumbed sub-circuits without adding additional components to the hard plumbing. This may lower costs, improve usability, and simplify installation, among other advantages.

In one independent aspect, a mobile machine is provided and includes a frame, a plurality of crawlers coupled to the frame, a plurality of actuators operably coupled to the plurality of crawlers, and a fluid circuit configured to supply a working fluid to each actuator of the plurality of actuators. The fluid circuit includes a plurality of hard plumbed sub-circuits and a floating sub-circuit. The plurality of hard plumbed sub-circuits are connected to the plurality of actuators to allow flow of the working fluid to and from the plurality of actuators. The floating sub-circuit interconnects the plurality of actuators and allows the working fluid to flow between the plurality of actuators. The floating sub-circuit includes floating valves that control the flow of the working fluid in the floating sub-circuit independent of the flow of the working fluid in the plurality of hard plumbed sub-circuits.

In some aspects, the floating sub-circuit includes flexible lines connected between the floating valves.

In some aspects, the floating valves are controllable to isolate the floating sub-circuit from the plurality of hard plumbed sub-circuits.

In some aspects, each actuator of the plurality of actuators includes a first end and a second end, and, for each actuator, the first and second ends are each connected to the floating sub-circuit. In some aspects, for each actuator, one of the floating valves is positioned proximate the first end between a flexible line of the floating sub-circuit and a hard plumbed sub-circuit of the plurality of hard plumbed sub-circuits and another one of the floating valves is positioned proximate the second end between another flexible line of the floating sub-circuit and the hard plumbed sub-circuit. In some aspects, each hard plumbed sub-circuit of the plurality of hard plumbed sub-circuits includes a first hard pipeline connected to the first end of an actuator of the plurality of actuators and a second hard pipeline connected to the second end of the actuator. In some aspects, for each hard plumbed sub-circuit of the plurality of hard plumbed sub-circuits, the first hard pipeline is connected to a first holding valve and the second hard pipeline is connected to a second holding valve. In some aspects, for each hard plumbed sub-circuit of the plurality of hard plumbed sub-circuits, the first hard pipeline is connected one of the floating valves and the second hard pipeline is connected to another one of the floating valves.

In some aspects, the mobile machine includes a plurality of control valves upstream from the plurality of hard plumbed sub-circuits, the plurality of control valves being operable to independently control flow of the working fluid to and from the plurality of hard-plumbed sub-circuits.

In some aspects, the mobile machine includes a controller operable to control the floating valves based on an operating mode of the machine. In some aspects, the controller is operable to: control the floating valves to allow the working fluid to flow in the floating sub-circuit when the machine is in a tram operating mode; and control the floating valves to isolate the floating sub-circuit during a working operating mode.

In another independent aspect, a hydraulic system is provided for a mobile machine including a frame and crawlers coupled to the frame. The hydraulic system includes a plurality actuators configured to be operably coupled to the crawlers and a fluid circuit configured to supply a working fluid to the plurality of actuators. The fluid circuit includes a plurality of hard plumbed sub-circuits connected to the plurality of actuators to allow flow of the working fluid to and from the plurality of actuators and a floating sub-circuit interconnecting the plurality of actuators. The floating sub-circuit allows the working fluid to flow between the plurality of actuators. The floating sub-circuit includes floating valves that control the flow of the working fluid in the floating sub-circuit independent of the flow of the working fluid in the plurality of hard plumbed sub-circuits.

In some aspects, the floating sub-circuit includes flexible lines connected between the floating valves.

In some aspects, each actuator of the plurality of actuators includes a first end and a second end, and wherein, for each actuator, the first and second ends are each connected to the floating sub-circuit. In some aspects, for each actuator, one of the floating valves is positioned proximate the first end between a flexible line of the floating sub-circuit and a hard plumbed sub-circuit of the plurality of hard plumbed sub-circuits and another one of the floating valves is positioned proximate the second end between another flexible line of the floating sub-circuit and the hard plumbed sub-circuit. In some aspects, each hard plumbed sub-circuit of the plurality of hard plumbed sub-circuits includes a first hard pipeline connected to the first end of an actuator of the plurality of actuators and a second hard pipeline connected to the second end of the actuator. In some aspects, for each hard plumbed sub-circuit, each of the first and second hard pipelines is connected to a holding valve.

In another independent aspect, a fluid circuit is provided for supplying working fluid to actuators of a mobile machine that control movement of crawlers of the machine. The fluid circuit includes a plurality of hard plumbed sub-circuits connectable to the actuators to allow flow of the working fluid to and from the actuators and a floating sub-circuit for interconnecting the actuators. The floating sub-circuit allows the working fluid to flow between the actuators. The floating sub-circuit includes floating valves that control the flow of the working fluid in the floating sub-circuit independent of the flow of the working fluid in the plurality of hard plumbed sub-circuits.

In some aspects, the floating sub-circuit includes flexible lines connected between the floating valves.

In some aspects, each hard plumbed sub-circuit of the plurality of hard plumbed sub-circuits includes a first hard pipeline and a second hard pipeline. In some aspects, for each hard plumbed sub-circuit, the first and second hard pipelines are connectable to one of the actuators. In some aspects, for each hard plumbed sub-circuit, each of the first and second hard pipelines is connected to a holding valve.

In another independent aspect, a method of operating a hydraulic system for a mobile machine is provided. The mobile machine includes crawlers for moving the machine, the hydraulic system includes actuators operably coupled to the crawlers and a fluid circuit connected to the actuators, and the fluid circuit includes hard plumbed sub-circuits connected to the actuators and a floating sub-circuit interconnecting the actuators. The method includes: in a first operating mode of the machine: supplying working fluid to at least one of the actuators through at least one of the hard plumbed sub-circuits connected to the at least one of the actuators; and controlling floating valves of the floating sub-circuit to isolate conduits of the floating sub-circuit from the hard plumbed sub-circuits and from the working fluid being supplied to the at least one of the actuators; and in a second operating mode of the machine: ceasing supply of the working fluid through the hard plumbed sub-circuits; and controlling the floating valves to allow the working fluid in the fluid circuit to flow in the conduits of the floating sub-circuit between the actuators.

Other aspects will become apparent by consideration of the detailed description and accompanying drawings.

### BRIEF DESCRIPTION OF THE DRAWINGS

FIG. 1 is an elevation view of one embodiment of a mobile machine;
FIG. 2 is a perspective view of a portion of a frame and crawlers for the mobile machine of FIG. 1;
FIGS. 3A and 3B depict the crawlers of FIG. 2 positioned on uneven terrain;
FIG. 4 is a schematic diagram of a fluid circuit for actuators controlling movement of the crawlers of FIG. 2;
FIG. 5 depicts an example of flow of working fluid through the fluid circuit of FIG. 4 when extending the actuators;
FIG. 6 depicts an example of flow of working fluid through the fluid circuit of FIG. 4 when retracting the actuators;
FIG. 7 depicts an example of flow of working fluid through the fluid circuit of FIG. 4 when the actuators are in a floating state;
FIG. 8 depicts an example of flow of working fluid through the fluid circuit of FIG. 4 when extending only one of the actuators;
FIG. 9 depicts an example of flow of working fluid through the fluid circuit of FIG. 4 when retracting only one of the actuators; and
FIG. 10 is a schematic of one embodiment of a controller for the fluid circuit.
FIG. 11 is a flow diagram of a method of operating a hydraulic system of a mobile machine.

Corresponding reference numerals used throughout the drawings indicate corresponding features, elements, and components.

### DETAILED DESCRIPTION

Before any embodiments are explained in detail, it is to be understood that the embodiments are not limited to the details of the configuration and arrangement of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. When introducing elements of various embodiments of the present disclosure, the articles "a," "an," and "the" are intended to mean that there are one or more of the elements. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. References to "one embodiment" or "an embodiment" of the present disclosure are not intended to be interpreted as excluding the existence of additional embodiments that also incorporate the recited features. The terms of "upstream" and "downstream" are understood relatively to the normal direction of circulation of a fluid in a conduit.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (for example, stored on non-transitory computer-readable medium) executable by one or more electronic processors, such as a microprocessor and/or application specific integrated circuits ("ASICs"). As such, it should be noted that a plurality of hardware and software based devices, as well as a plurality of different structural components, may be utilized to implement the embodiments. For example, "servers," "computing devices," "controllers," "processors," and the like, described in the specification can include one or more electronic processors, one or more computer-readable medium modules, one or more input/output interfaces, and various connections (for example, a system bus) connecting the components.

Relative terminology, such as, for example, "about," "approximately," "substantially," and the like, used in connection with a quantity or condition would be understood by those of ordinary skill to be inclusive of the stated value and has the meaning dictated by the context (for example, the term includes at least the degree of error associated with the measurement accuracy, tolerances (for example, manufacturing, assembly, use, and the like) associated with the particular value, and the like). Such terminology should also be considered as disclosing the range defined by the absolute values of the two endpoints. For example, the expression "from about 2 to about 4" also discloses the range "from 2 to 4." The relative terminology may refer to plus or minus a percentage (for example, 1%, 5%, 10%, or more) of an indicated value.

Functionality described herein as being performed by one component may be performed by multiple components in a distributed manner. Likewise, functionality performed by multiple components may be consolidated and performed by a single component. Similarly, a component described as performing particular functionality may also perform additional functionality not described herein. For example, a device or structure that is "configured" in a certain way is configured in at least that way but may also be configured in ways that are not explicitly listed.

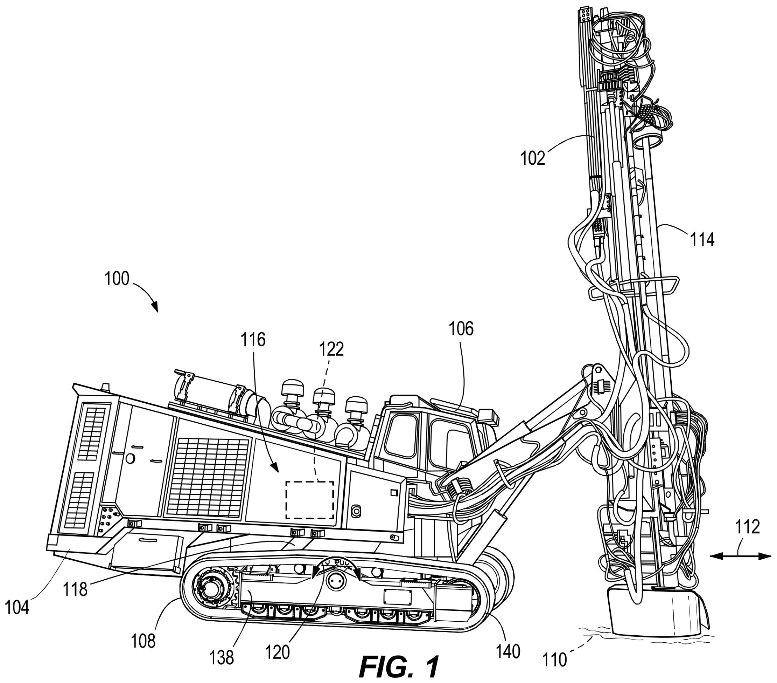

Referring now to the drawings, FIG. 1 depicts one embodiment of a mobile, track-mounted machine 100, also referred to as mobile machine, a track-mounted machine, or a crawler-mounted machine. The machine 100 may be a mobile industrial machine or drill. In this embodiment the machine 100 is a surface-type mining drill, such as a track drill. In some embodiments, the machine may be another type of drill, such as a platform drill, a blasthole drill, etc. In some embodiments, the machine may be another type of drill or other mobile, track-mounted machine, such as other types of mobile, track-mounted mining equipment, construction equipment, forestry equipment, and the like.

The machine 100 of FIG. 1 includes a raised structure 102 (e.g., a drill tower), a frame 104 supporting the raised structure 102, an operator's cab 106 coupled to the frame 104, and crawlers 108 connected to the frame 104. The frame 104 may also support a machinery house. In some embodiments, the frame may support a raised structure such as a drill tower and/or may support another working element of the machine. The crawlers 108 are configured to move the machine 100 along a ground surface 110 in a travel direction 112 (e.g., forward and backward) and to adjust the travel direction (e.g., by turning the machine). The machine 100 includes two crawlers 108 in this embodiment, positioned on opposite lateral sides of the frame 104. More than two crawlers may be included in some embodiments. In some embodiments, the raised structure 102 may be coupled to and support a drill pipe 114 (e.g., with a drill bit, not shown), which may be configured to extend through the ground surface 110 (e.g., vertically downward) and into a borehole.

Each crawler 108 may include a track hub 138 and one or more tracks 140 operably coupled to the track hub. The track 140 may be operable or drivable to move in a continuous loop around a periphery of the track hub 138. The track 140 of each crawler 108 can be operable independent of the track of the other crawler, such that the tracks of the crawlers can move at different times, at different speeds, and/or in different directions (e.g., one track moving forward and another track moving in reverse). In some embodiments, the tracks 140 of the crawlers 108 may be operable to move in unison. The moving tracks 140 may engage the ground surface 110 to move the machine 100 along the ground surface. For simplicity, each track 140 is illustrated as a flattened member that extends in a continuous loop around the track hub 138; however, it is understood that each track may be constructed as a plurality of members (e.g., track pads, track shoes) coupled sequentially to one another to form a continuous loop.

The machine 100 also includes a hydraulic system 116 for the crawlers 108. The hydraulic system 116 includes actuators 118 operably coupled to the crawlers 108. The actuators 118 include hydraulic cylinders in the illustrated embodiment. In some embodiments, the actuators may include hydraulic cylinders, other linear actuators or motors, hydraulic rotary motors, or other rotary motors or actuators. In the illustrated embodiment, at least one actuator 118 corresponds to each crawler 108. In some embodiments, one actuator 118 is dedicated to and associated with a corresponding one of the crawlers 108. In some embodiments, more than one actuator, such as two actuators, may be dedicated to and associated with a corresponding one of the crawlers 108.

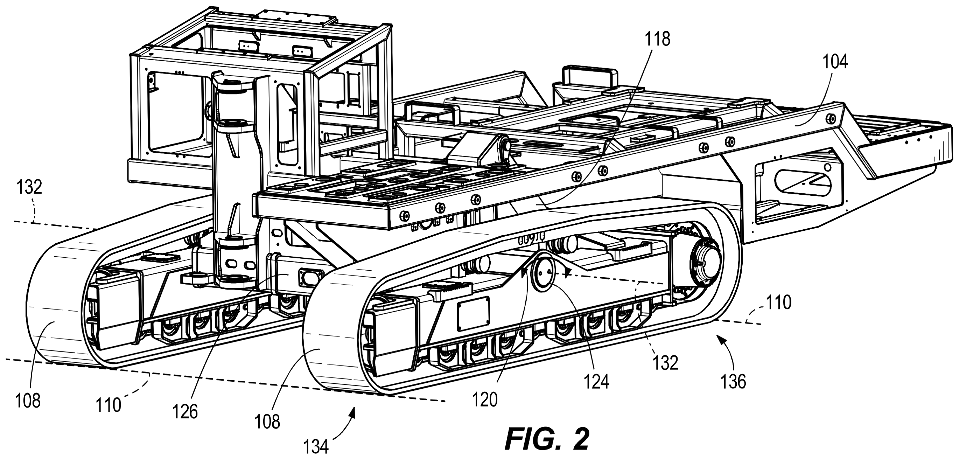

The actuators 118 control movement of the track hubs 138 relative to the frame 104. Movement of the track hubs 138 via the actuators 118 may control the position and/or orientation of the track hubs relative to the frame 104 which in turn may control the position and/or orientation of the tracks 140 for engaging the ground surface 110. In some embodiments, the actuators 118 are operable to move the track hubs 138 in a direction other than the direction of travel 112. For example, in the illustrated embodiment, the actuators 118 are operable to move the track hubs 138 in a pivoting or rotational direction 120 about an axis 132 (see FIG. 2). The actuators 118 may each include a motive element (e.g., a piston rod, shaft, and the like) that is coupled to the track hub 138 of the corresponding crawler 108. Movement of the motive element may correspond to movement of the track hub 138 of the corresponding crawler 108.

The actuators 118 are connected to a fluid circuit 122 of the hydraulic system 116. The fluid circuit 122 supplies working fluid (e.g., hydraulic oil) to the actuators 118. The working fluid may include hydraulic fluid or pressurized fluid. In the illustrated embodiment, the working fluid is a hydraulic fluid; nonetheless, it is understood that, in other embodiments, another type of pressurized fluid may be used to operate the actuators 118. The hydraulic fluid may cause movement of the motive elements of the actuators 118 and, correspondingly, movement of the track hubs 138 of the crawlers 108. For example, in embodiments in which the actuators 118 include hydraulic cylinders, the working fluid supplied to the actuators may cause a piston rod to extend from and/or retract into a barrel of the cylinder. The piston rod may be coupled to the track hub 138 of the corresponding crawler 108 such that extension and retraction of the piston rod corresponds to movement of the track hub. For example, the piston rod may extend and retract to move the track hub 138 of the crawler 108 in the direction 120, e.g., to rotate or pivot the track hub 138 about the axis 132 (shown in FIG. 2).

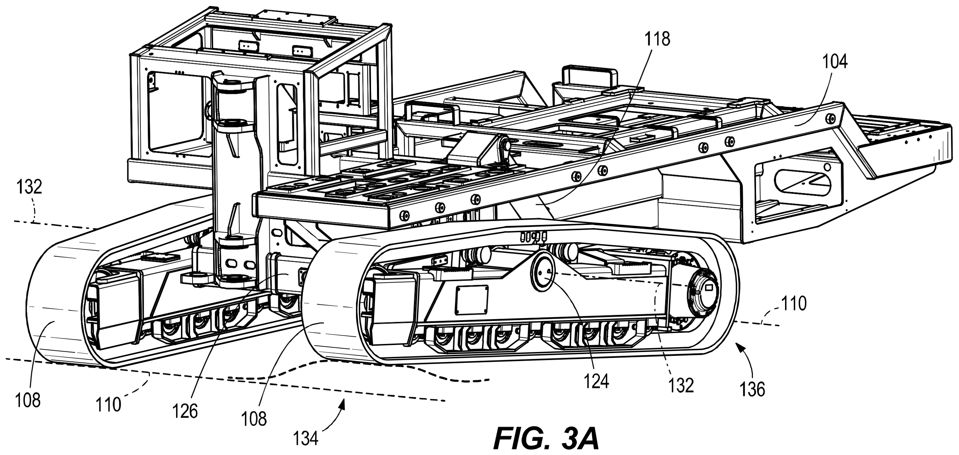

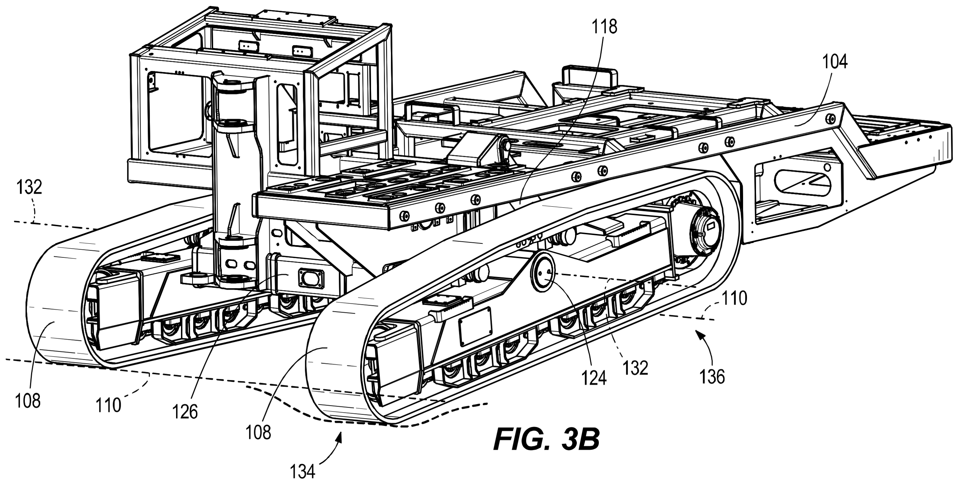

Referring to FIG. 2, each track hub 138 may be moveably coupled to the frame 104 via a corresponding coupling member 124 (e.g., an axle or a king pin). One coupling member or multiple coupling members may be provided for moveably coupling the corresponding track hub 138 to the frame 104. The coupling members 124 may pivotally couple the corresponding track hubs 138 to a base 126 of the frame 104. The track hubs 138 may move (e.g., rotate or pivot) in the direction 120 about a pivot axis 132 via the coupling members 124 relative to the base 126. The pivot axis 132 may be substantially transverse to the direction of travel 112 in FIG. 1 and/or parallel to grade of the ground surface 110. The track hubs 138 may pivot such that leading ends 134 and the tail ends 136 of the crawlers 108 can change in elevation relative to the frame 104. For example, for each crawler 108, the leading end 134 may be moved vertically closer to the frame 104 while the tail end 136 moves vertically farther from the frame (see FIG. 3A), or the leading end may be moved vertically farther from the frame while the tail end moves vertically closer to the frame (see FIG. 3B).

The actuators 118 are operable to drive the track hubs 138 of the corresponding crawlers 108 to pivot relative to the frame 104. Description of the actuators 118 driving movement or pivoting of the track hubs 138 can interchangeably be described as the actuators driving movement or pivoting of the crawlers 108. Similarly, movement or pivoting of the track hubs 138 can interchangeably be described as movement or pivoting of the crawlers 108. The actuators 118 may drive the tail ends 136 of the corresponding crawlers 108 to cause the crawlers to pivot. In some embodiments, the actuators may drive the leading ends 134 of the crawlers 108 to cause the crawlers to pivot. For example, in embodiments where the actuators 118 include hydraulic cylinders, the piston rods of the cylinders may extend and retract to drive the tail ends 136 or the leading ends 134 for pivoting the crawlers. In some embodiments, the actuators may include hydraulic motors or rotary actuators that may drive rotational movement of the crawlers 108 about the pivot axis 132.

The coupling members 124 allow the crawlers 108 to pivot independent of one another. The actuators 118 are also independently operable to drive the corresponding crawlers 108 to pivot independent of one another. This allows the crawlers 108 to traverse contours of the ground surface 110 that may vary between the crawlers.

Referring to FIGS. 3A and 3B, when the ground surface 110 has a non-planar contour, the crawlers 108 can move via the corresponding actuators 118 and coupling members 124 to traverse the non-planar contour. For example, the crawlers 108 may pivot to traverse hills, bumps, holes, or other contours and changes in elevation of the ground surface 110 encountered during travel. The contours and changes in elevation may differ between the crawlers 108 (e.g., a portion of the ground surface encountered by one crawler may be different from a portion of the ground encountered by the other crawler). The crawlers 108 can traverse different contours and changes in elevation via the independent pivoting of the crawlers. In doing so, the leading ends 134 and the tail ends 136 of the corresponding crawlers 108 can have different elevations relative to the frame 104 and relative to the leading ends and tail ends of the other crawler to traverse the contour of the ground surface 110. In this way, the crawlers 108 can be non-parallel to one another depending on the contour of the ground surface 110, as shown in FIGS. 3A and 3B. The movement of the crawlers 108 also allows the frame 104 to remain relatively level with respect to gravity. This can minimize the effects of the non-planar contour of the ground surface 110 that are experienced by an operator in the operator cab 106.

For brevity and simplicity, one of the crawlers 108 is shown to pivot in FIGS. 3A and 3B between different orientations while positioned on uneven terrain. It is understood that one or both the crawlers can pivot as depicted in FIGS. 3A and 3B. Depending on the contours of the terrain, the crawlers may pivot independently (e.g., at different times or intervals) or in unison. The crawlers can pivot independently or in unison via the independently operated actuators.

The ability of the crawlers 108 to traverse the contour of the ground surface 110 may be desirable in various operating modes of the machine 100. For example, when the machine 100 is in tram operating mode and moving over uneven terrain, the crawlers 108 may encounter forces having various magnitudes and directions. Allowing the crawlers 108 to move in response to a contour of the terrain maintains greater engagement between the crawlers 108 and the ground to improve stability and can reduce stresses on the frame 104 during movement of the machine 100. When the machine 100 is in a working operating mode (e.g., a drilling operating mode), the machine is stationary and the crawlers 108 can be positioned to level the frame 104 and the raised structure 102. This may simplify operation, improve efficiency, and/or improve safety and enable the machine 100 to operate on various types of terrain.

Depending on the operating mode of the machine 100, it may be desirable to either have the actuators 118 "float" or to lock the actuators 118 in position while counterbalancing loads. For example, in the tram operating mode, it may be desirable to have the actuators 118 float or move freely via the oscillation of the working fluid between the actuators as the crawlers 108 move in response to the contour of the ground surface. This may allow the crawlers 108 to traverse the terrain while the frame 104 remains level. In the working operating mode, the actuators 118 should remain locked in their designated positions according to the contour of the ground such that the frame 104 and the raised structure 102 do not inadvertently move relative to the ground. While the actuators 118 are locked, it may be desirable to counterbalance any loads that may be experienced by the actuators during the working operating mode that could cause inadvertent movement of the crawlers 108 relative to the frame 104.

To enable this functionality, various valves and piping may be required for the fluid circuit to provide various fluid pathways for the working fluid to flow to, from, and between the actuators. Such installations may be difficult in certain applications of the machine 100, such as drilling applications, as certain health, safety, and environmental requirements (e.g., CE compliance requirements) may specify piping requirements for hydraulic circuits. For example, compliance may require that any counterbalancing or holding valves be hard plumbed to the actuators 118. In this regard, any valves or piping that would allow for floating the actuators 118 cannot result in the holding valves being located remotely from the actuators 118. As best understood, no hydraulic system exists that enables both floating and counterbalancing the actuators of a mobile, track-mounted machine while also complying with counterbalancing hard plumbing requirements. The fluid circuit 122 addresses this need as described below.

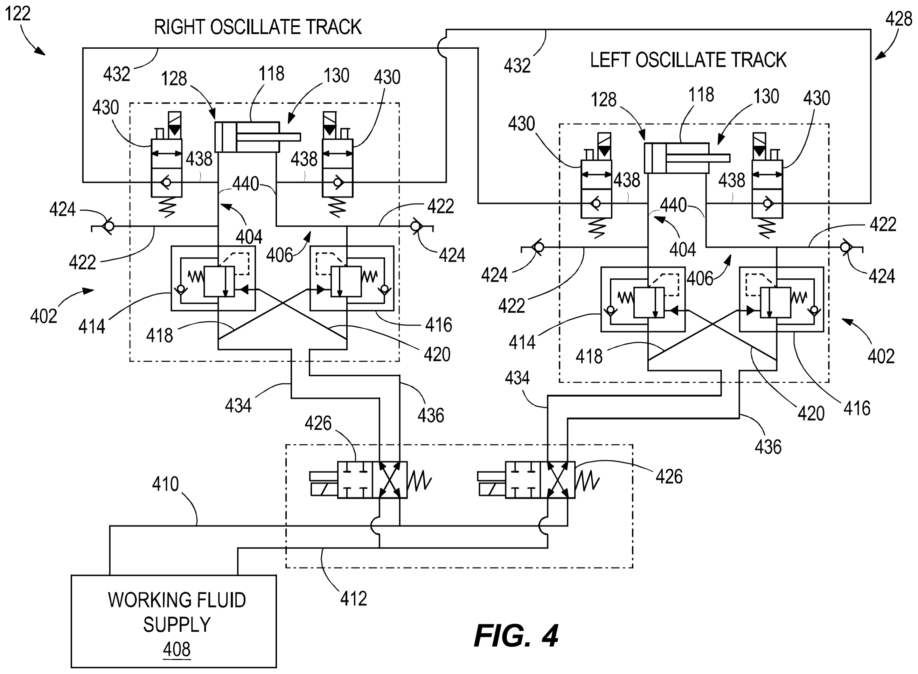

Referring now to FIG. 4, a diagram of the fluid circuit 122 of the machine 100 is shown. The fluid circuit 122 includes hard plumbed sub-circuits 402 connected to corresponding actuators 118 (e.g., hydraulic cylinders). As used herein, the phrases "hard plumbed," "hard pipeline," "hard piping," "hard tubing," "hard line," and the like, refer to rigid piping and/or tubing (e.g., rigid metal piping/tubing) forming direct and permanent or nearly permanent connections (e.g., via welding), and/or manifold blocks that integrate various lines or conduits (e.g., via drilling or machining the lines or conduits in the block). In some embodiments, a hard plumbed circuit may include rigid piping/tubing and manifold block(s) such as hydraulic manifold blocks. In general, a hard plumbed circuit or hard piping/tubing excludes the use of flexible hoses or the like unless explicitly stated otherwise or the context clearly indicates otherwise. In this embodiment, there are two hard plumbed sub-circuits 402 each corresponding to one of the two actuators 118. In some embodiments, more than two hard plumbed sub-circuits 402 may be included, corresponding to more than two actuators being included in the tracked-mounted machine 100. Each hard plumbed sub-circuit 402 may be dedicated to one actuator 118. In some embodiments, a hard plumbed sub-circuit may be provided for and dedicated to multiple actuators that correspond to one crawler. For example, in embodiments where multiple actuators are provided to move a crawler, one hard plumbed sub-circuit may be provided for and dedicated to the multiple actuators of that crawler.

The working fluid may flow independently through each one of the hard plumbed sub-circuits 402 to and from the corresponding actuator 118. For example, the working fluid may flow through a first hard plumbed sub-circuit 402 to and from a corresponding first actuator 118 independent of the flow of the working fluid to and from a second actuator 118 via a second hard plumbed sub-circuit 402. In this way, the working fluid can flow to and/or from one, both, or none of the actuators 118.

Each hard plumbed sub-circuit 402 includes a first hard pipeline 404 and a second hard pipeline 406. Each one of the first hard pipeline 404 and the second hard pipeline 406 are connected to the corresponding actuator 118. The hard pipelines 404, 406 each include rigid piping or tubing (e.g., rigid metal piping or tubing) that is directly and permanently or nearly permanently connected to the corresponding actuator 118, e.g., via welding. In some embodiments, the hard pipelines 404, 406 may include, or may be connected with, manifold blocks of a hard plumbed sub-circuit 402. In this embodiment, the first hard pipeline 404 is permanently or nearly permanently connected, e.g., welded, to a first end 128 (e.g., an extend end) of the corresponding actuator 118, and the second hard pipeline 404 is permanently or nearly permanently connected, e.g., welded, to a second end 130 (e.g., a retract end) of the corresponding actuator 118. The terms "first" and "second" are used for convenience to describe the ends 128, 130, and the ends of the actuator can be referred to interchangeably as a first end and second end.

In this embodiment, the actuators 118 are hydraulic cylinders with a piston and piston rod. The first end 128 corresponds to the end of the hydraulic cylinder that can receive the working fluid to extend the piston rod from the barrel of the cylinder, with the piston driving the working fluid out from the second end 130. The second end 130 corresponds to the end of the hydraulic cylinder that can receive working fluid to retract the piston rod within the barrel of the cylinder, with the piston driving working fluid out through the first end 128. When describing the actuators which may include hydraulic cylinders, the first end 128 may be referred to as an extend end and the second end 130 may be referred to as a retract end. However, it is understood that the actuators are not limited to hydraulic cylinders and, unless explicitly stated otherwise or the context clearly indicates otherwise, reference to the retract end and the extend end encompasses ends or fluid ports of other actuators such as other linear actuators or motors or rotary motors or actuators.

The hard plumbed sub-circuits 402 are each fluidly connected to a working fluid supply 408 that supplies and receives the working fluid to and from the hard plumbed sub-circuits. Intermediate lines 434, 436 are connected between the working fluid supply 408 and the hard plumbed sub-circuits 402. For each hard plumbed sub-circuit 402, a first intermediate line 434 is fluidly connected to the first hard pipeline 404 and a second intermediate line 436 is fluidly connected to the second hard pipeline 406. The working fluid may flow to and from the first hard pipeline 404 via the first intermediate line 434 and to and from the second hard pipeline 406 via the second intermediate line 436. The intermediate lines 434, 436 may be hard plumbed or may include flexible hoses or the like.

The first intermediate lines 434 may be connected to a first line 410 of the working fluid supply 408. The second intermediate lines 436 may be connected to a second line 412 of the working fluid supply 408. The fluid circuit 122 and/or the working fluid supply 408 may include a directional control manifold (not shown) that controls the flow direction of the working fluid in the first and second lines 410, 412. The direction control manifold may control the working fluid to be supplied to the hard plumbed sub-circuits via the first line 410 and returned via the second line 412, or vice versa.

Each hard plumbed sub-circuit 402 includes holding valves 414, 416. The holding valves 414, 416 may include counterbalancing valves or brake valves. A first holding valve 414 is positioned proximate the first end 128 of the corresponding actuator 118 and is connected to the first end via the first hard pipeline 404. A second holding valve 416 is positioned proximate the second end 130 of the corresponding actuator 118 and is connected to the second end via the second hard pipeline 406. The holding valves 414, 416 are hard plumbed to the actuator 118 via the hard pipelines 404, 406 and located proximate the actuator, allowing the fluid circuit 122 to satisfy compliance requirements. In some embodiments, the holding valves 414, 416 may be connected with and/or incorporated in manifold block(s) of the hard plumbed sub-circuit 402.

The holding valves 414, 416 are configured to stabilize the working fluid in the corresponding actuator 118 up to a certain pressure. The first holding valve 414 limits or prevents the flow of the working fluid out of the first end 128 of the corresponding actuator 118 and the second holding valve 416 limits or prevents out of the second end 130 of the corresponding actuator. In this way, the holding valves 414, 416 can cooperate to maintain the corresponding actuator 118 in a designated state, e.g., an extended or retracted state. The holding valves 414, 416 may also allow the working fluid in the corresponding hard plumbed sub-circuit 402 to bleed off in the event of over-pressurized loads or built up pressure and can resume stabilizing the actuator 118 once the over-pressurization is alleviated. In some embodiments, the working fluid that bleeds off through the holding valve(s) 414, 416 (e.g., in the event of temperature induced or load induced over-pressurization in a hard plumbed sub-circuit 402) may return to the working fluid supply 408 via the intermediate line(s) 434, 436 and the line(s) 410, 412.

The holding valves 414, 416 are positioned between the hard pipelines 404, 406 and the intermediate lines 434, 436. For example, the first holding valves 414 are positioned between the first hard pipelines 404 and the first intermediate lines 434. The second holding valves 416 are positioned between the second hard pipelines 406 and the second intermediate lines 436. In this regard, the intermediate lines 434, 436 do not form a connection between the holding valves and the actuators and need not be hard plumbed (e.g., the intermediate lines may include flexible hoses or the like).

In some embodiments, the holding valves 414, 416 may be interconnected via pilot lines 418, 420. The pilot lines 418, 420 may be upstream from the hard plumbed sub-circuits 402 and branched from the intermediate lines 434, 436. The pilot lines 418, 420 thereby do not form a connection between the holding valves and the actuators and need not be hard plumbed (e.g., the pilot lines may include flexible hoses or the like). A first pilot line 418 may connect between the second holding valve 416 and the first intermediate line 434. A second pilot line 420 may connect between the second holding valve 416 and the second intermediate line 436. The pilot lines 418, 420 may allow the working fluid flowing through the intermediate lines 434, 436 toward the hard plumbed sub-circuits 402 to apply piloting pressure for opening the holding valves 414, 416. For example, when working fluid is supplied to the second hard pipeline 406 and the second end 130 of the actuator 118 via the second intermediate line 436, some of the working fluid may flow through the second pilot line 420 to apply piloting pressure for opening the first holding valve 414. The first holding valve 414 is opened to allow the working fluid exiting the first end 128 of the actuator to flow through the first hard pipeline 404 and the first holding valve and into the first intermediate line 434. As the supply (or pressure) of the working fluid in the second intermediate line 436 drops, the piloting pressure on the first holding valve 414 also drops which increases the requisite pressure in the first hard pipeline 404 for opening the first holding valve and allowing the working fluid to exit through the first holding valve. Similar mechanics apply for the first pilot line 418 and the second holding valve 416 when the working fluid is supplied to the first hard pipeline 404 via the first intermediate line 434.

In some embodiments, each of the hard pipelines 404, 406 may include a pressure tap line 422 positioned between the holding valves 414, 416 and the actuator 118. The pressure tap lines 422 may be equipped with corresponding pressure tap valves 424. The pressure tap lines 422 and the corresponding pressure tap valves 424 may provide a test point to which a device (e.g., a test hose) can be connected under pressure for testing and/or manually relieving pressure. The pressure tap lines 422 and the corresponding pressure tap valves 424 may allow safe servicing of the actuator and/or the hard plumbed sub-circuit. The pressure tap lines 422 may be at least partially defined by hard piping/tubing and/or manifold block(s). In some embodiments, the pressure tap lines 422 may be at least partially defined by manifold block(s) that also include the holding valves 414, 416.

The fluid circuit 122 may also include control valves 426 operable to control flow of the working fluid to and from the hard plumbed sub-circuits 402 and the actuators 118 via the intermediate lines 434, 436. The control valves 426 may be positioned upstream from the hard plumbed sub-circuits 402, proximate the first and second lines 410, 412. In some embodiments, each control valve 426 may be positioned on a first intermediate line 434 and a second intermediate line 436 upstream from one of the hard plumbed sub-circuits 402. The control valves 426 may be operable to control the flow of the working fluid in the corresponding first and second intermediate lines 434, 436. The control valves 426 may include two-position valves operable between an open position and a closed position. While in the open position, the control valves 426 may allow the working fluid to flow to and from the corresponding hard plumbed sub-circuits 402 via the corresponding intermediate lines 434, 436. While in the closed position, the control valves 426 can isolate the corresponding intermediate lines 434, 436 and the corresponding hard plumbed sub-circuits 402 from the working fluid supply 408. In some embodiments, the control valves may include three-position valves with an open center to allow the working fluid in the hard plumbed sub-circuit 404 to bleed off with one or both holding valves 414, 416 open, thereby reducing the risk of pressure build up. In some embodiments, the control valves may include three-position valves with a closed center. In some embodiments, multiple control valves may be included upstream from each one of the hard plumbed sub-circuits 402 on the corresponding intermediate lines 434, 436.

The fluid circuit 122 may enable controlled flow to and from the actuators 118 and counterbalancing loads on the actuator, for example, when the machine 100 is stationary and performing a working operation such as a drilling operation. During travel or another suitable operating mode of the machine 100, the fluid circuit 122 also allows the working fluid to oscillate between the actuators 118 for floating the actuators. To this end, the fluid circuit 122 also includes a floating sub-circuit 428 that interconnects the actuators 118. In this embodiment, the fluid circuit 122 interconnects the first ends 128 of the actuators 118 and interconnects the second ends 130 of the actuators. As such, each actuator 118 is connected at its first and second ends 128, 130 to the floating sub-circuit 428 and the corresponding hard plumbed sub-circuit 402 and, more particularly, the holding valves 414, 416.

The floating sub-circuit 428 allows the working fluid to oscillate between the actuators 118 in response to loads on the crawlers 108, such that the actuators can float. The floating sub-circuit 428 may allow the working fluid to oscillate during a tram operating mode of the machine 100, for example, or another operating mode in which it is desirable to have the actuators 118 float. The working fluid oscillating in the floating sub-circuit 428 can maintain the crawlers 108 on the ground and alleviate stresses on the frame 104 that may otherwise be experienced by forces of varying magnitude and direction on the crawlers 108, e.g., when the machine 100 traverses uneven terrain. Floating the actuators 118 via the floating sub-circuit 428 may also stabilize the frame 104 during travel of the machine 100, providing a smoother experience for the operator and reducing any negative effects that uneven terrain may have on operating the machine 100. The floating sub-circuit 428 is also piped between floating valves 430 that can isolate the floating sub-circuit from the actuators 118 and the hard plumbed circuit 402, which can provide several advantages. For example, the floating sub-circuit 428 can be isolated via the floating valves 430 such that it does not interrupt the hard plumbing between the actuators 118 and the holding valve 414, 416 or interfere with the counterbalancing functionality. Moreover, the floating valves 430 break connection between the floating sub-circuit 428, the holding valves 414, 416, and the actuators 118 and thereby enable the use of flexible lines (e.g., hoses) for piping the floating sub-circuit. This can lower costs, improve usability, and/or simplify installation, among other advantages.

The floating sub-circuit 428 includes the floating valves 430 (e.g., solenoid valves) which are positioned between the hard plumbed sub-circuits 402 and conduits 432 of the floating sub-circuit. In this embodiment, each one of the floating valves 430 is positioned on a branched hard line 438 of the hard plumbed sub-circuit 402. The branched hard lines 438 are located proximate ends of the actuators 118. Each branched hard line 438 may be directly connected to a main hard line 440 of one of the hard pipelines 404, 406 of the corresponding hard plumbed sub-circuit 402. In particular, the hard pipelines 404, 406 each include a main hard line 440 extending between the corresponding holding valves 414, 416 and the corresponding ends 128, 130 of the actuators 118. The main hard lines 440 may be directly and permanently or nearly permanently connected (e.g., via welding) to the corresponding holding valves 414, 416, or a manifold block incorporating the holding valve, and the corresponding ends 128, 130 of the actuators 118. The branched hard lines 438 extend between the corresponding main hard lines 440 and the corresponding floating valves 430. The branched hard lines 438 may be directly and permanently or nearly permanently connected (e.g., via welding) to the corresponding main hard line 440 and the corresponding floating valve 430. The pressure tap lines 422 are also branched from the main hard lines 440 and may be directly and permanently or nearly permanently connected (e.g., via welding) to the corresponding main hard line 440 and the corresponding pressure tap valve 424. In some embodiments, the main hard lines 440, the branched hard lines 438, and/or the pressure tap lines 422 may be at least partially defined by manifold block(s).

The pressure tap lines 422, the branched hard lines 438, and the main hard lines 440 cooperatively define the hard pipelines 404, 406 of a hard plumbed sub-circuit 402. As such, the pressure tap lines 422, the branched hard lines 438, and the main hard lines 440 are hard plumbed, e.g., using rigid piping/tubing and/or manifold blocks. The floating valves 430 are therefore also hard plumbed with the branched hard lines 438. The floating valves 430 break connection between hard plumbed sub-circuits 402 and the conduits 432 of the floating sub-circuit 428. The conduits 432 can thereby be isolated from the hard plumbed sub-circuits 402 by closing the floating valves 430. This allows the use of flexible lines (e.g., hoses) for the conduits 432 while satisfying or meeting compliance requirements.

In this embodiment, as shown in FIG. 4, for each actuator 118, one of the floating valves 430 is positioned on a branched hard line 438 proximate the first end 128 and one of the floating valves 430 is positioned on a branched hard line 438 proximate the second end 130. In some embodiments, the arrangement and number of the floating valves may vary, and any number of floating valves in any suitable arrangement may be included to enable the floating sub-circuit to function as described.

The conduits 432 extend between ends of the floating valves 430 opposite the branched hard lines 438. When the floating valves 430 are open, the working fluid may flow through the conduits 432 between the actuators 118. In this way, during a floating state of the actuators 118 in which the working fluid can oscillate between the actuators, flow of working fluid exiting the first end 128 of one actuator enters the first end of the other actuator. Correspondingly, during the floating state of the actuators 118, flow of working fluid exiting the second end 130 of one actuator enters the second end of the other actuator. In this way, extension of one actuator 118 in the floating state corresponds to retraction of the other actuator, and vice versa, allowing the actuators to float.

The floating valves 430 are controllable or positionable (e.g., manually or via a controller) to control flow of the working fluid through the floating sub-circuit 428. For example, the floating valves 430 can be controlled in an open position or state to allow the working fluid to flow or oscillate between the actuators. This may be desirable when the machine 100 is in a tram operating mode as described above. The working fluid can also flow through the floating sub-circuit 428 while the holding valves 414, 416 and/or the control valves 426 are closed. In particular, the working fluid that remains trapped between the actuators can flow through the floating sub-circuit 428 without requiring further supply of the working fluid via the hard plumbed circuit 402 that may otherwise cause movement the frame 104. The floating valves 430 can also be controlled in a closed position or state to isolate the floating sub-circuit 428 from the hard plumbed sub-circuits 402. This may be desirable when the machine 100 is stationary during a working operation mode, such as a drilling mode, and the actuators 118 are locked in position, to avoid any inadvertent movement of the actuators via flow of the working fluid in the floating sub-circuit 428. Isolating the floating sub-circuit 428 from the hard plumbed sub-circuits 402 may also be desirable when movement (e.g., extension or retraction) of only one, or only some and less than all, the actuators 118 is needed. The floating valves 430 can control the flow of the working fluid in the floating sub-circuit 428 independent of the hard plumbed sub-circuits 402, such that the working fluid can flow through the floating sub-circuit without flowing through the hard plumbed sub-circuits, and vice versa.

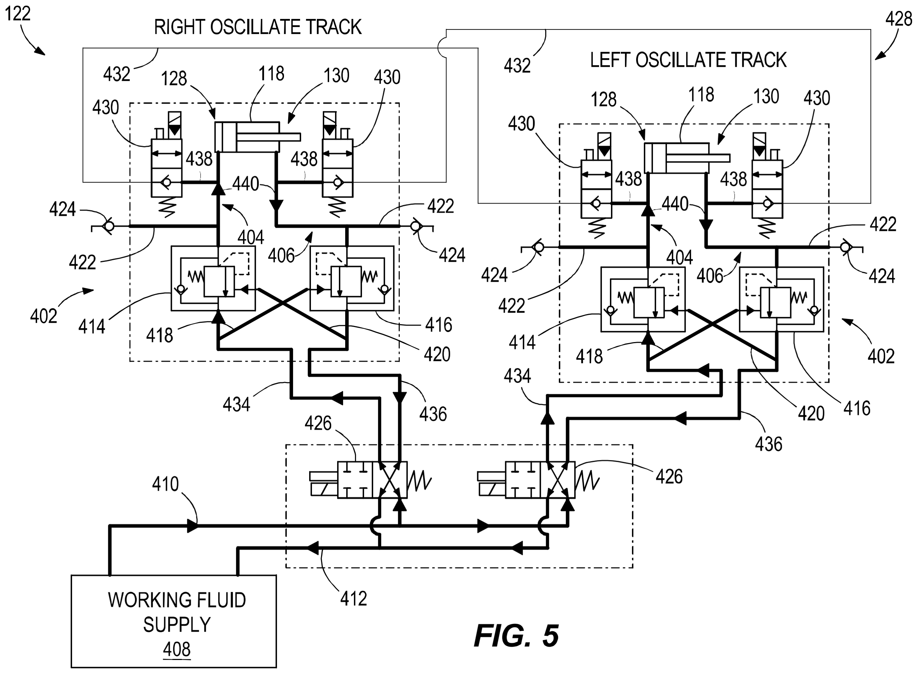

FIG. 5 depicts an example of flow of the working fluid through the fluid circuit 122 when both actuators 118 (e.g., hydraulic cylinders) are extended. In this example, the working fluid is supplied from the working fluid supply 408 via the first line 410. The control valves 426 direct the working fluid to flow into the first intermediate lines 434. The working fluid can flow through the first holding valves 414, into the first hard pipelines 404, and toward the extend ends 128 of the corresponding actuators 118. The working fluid entering the extend ends 128 causes the actuators 118 to extend, driving working fluid out from the retract ends 130 of the actuators. The second holding valves 416 may also be open during extension, such that the working fluid can flow through the second hard pipelines 406 into the second intermediate lines 436. Piloting pressure may be applied to the second holding valves 416 via the first pilot lines 418. The control valves 426 direct the working fluid flowing in the second intermediate lines 436 toward the second line 412 and the working fluid supply 408. All the floating valves 430 may be closed during extension of the actuators 118 to restrict flow of the working fluid through the floating sub-circuit 428. In some embodiments, all the floating valves 430 may be open during extension of the actuators 118 to allow flow of the working fluid in the floating sub-circuit 428 which may equalize pressure between the actuators 118. The holding valves 414 can subsequently be closed to maintain the actuators 118 in the designated extended state.

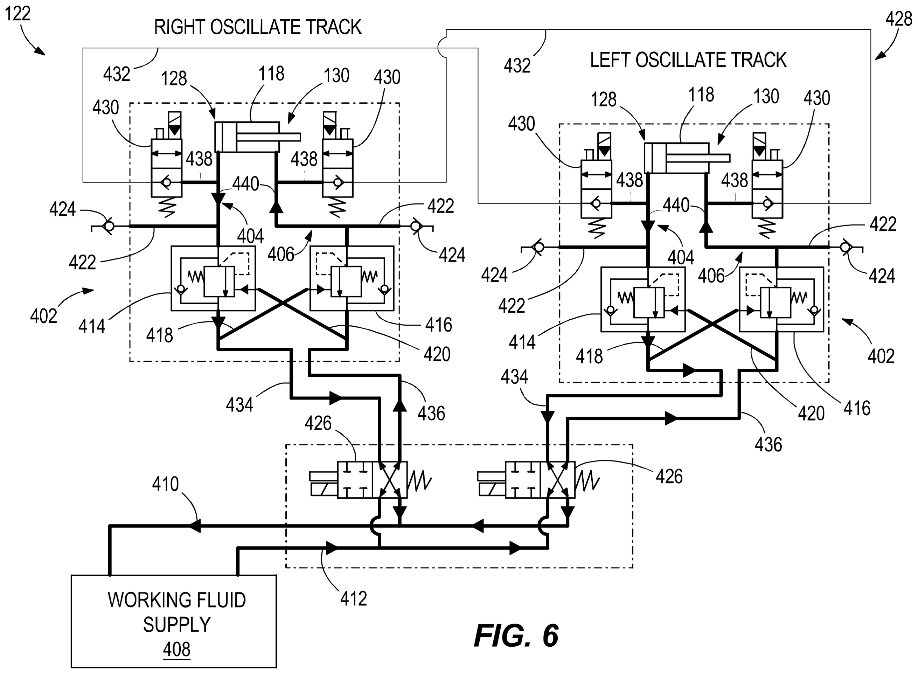

FIG. 6 depicts an example of flow of the working fluid through the fluid circuit 122 when both actuators 118 (e.g., hydraulic cylinders) are retracted. In this example, the working fluid is supplied from the working fluid supply 408 via the second line 412. The control valves 426 direct the working fluid to flow into the second intermediate lines 436. The working fluid can flow through the second holding valves 416, into the second hard pipelines 406, and toward the retract ends 130 of the corresponding actuators 118. The working fluid entering the retract ends 130 causes the actuators 118 to retract, driving working fluid out from the extend ends 128 of the actuators. The first holding valves 414 may also be open during retraction, such that the working fluid can flow through the first hard pipelines 404 into the first intermediate lines 434. Piloting pressure may be applied to the first holding valves 414 via the second pilot lines 420. The control valves 426 direct the working fluid flowing in the first intermediate lines 434 toward the first line 410 and the working fluid supply 408. In some embodiments, all floating valves 430 may be closed during retraction of the actuators 118 to restrict flow of the working fluid through the floating sub-circuit 428. In some embodiments, all the floating valves 430 may be open such that working fluid can flow through the conduits 432 interconnecting the extend ends 128 and the conduits 432 interconnecting the retract ends 130 of the actuators 118. This may stabilize the actuators 118 and balance pressure therebetween. The holding valves 414 can subsequently be closed to maintain the actuators 118 in the designated retracted state.

During extension of FIG. 5 and/or retraction of FIG. 6, the working fluid may exit the hard plumbed sub-circuits 402 toward the working fluid supply 408 via the holding valves 414, 416 when the conditions of the working fluid (e.g., pressure or temperature) exceed a set limit of the holding valves. For example, in the event of temperature induced and/or load induced over-pressurization in a hard plumbed sub-circuit 402, the pressure of the working fluid may exceed a set limit of a holding valve 414, 416 and the working fluid can bleed off. The bleed off may continue until the over-pressurization is alleviated and the conditions drop below the set limit at which point the holding valve can resume stabilizing the actuator 118.

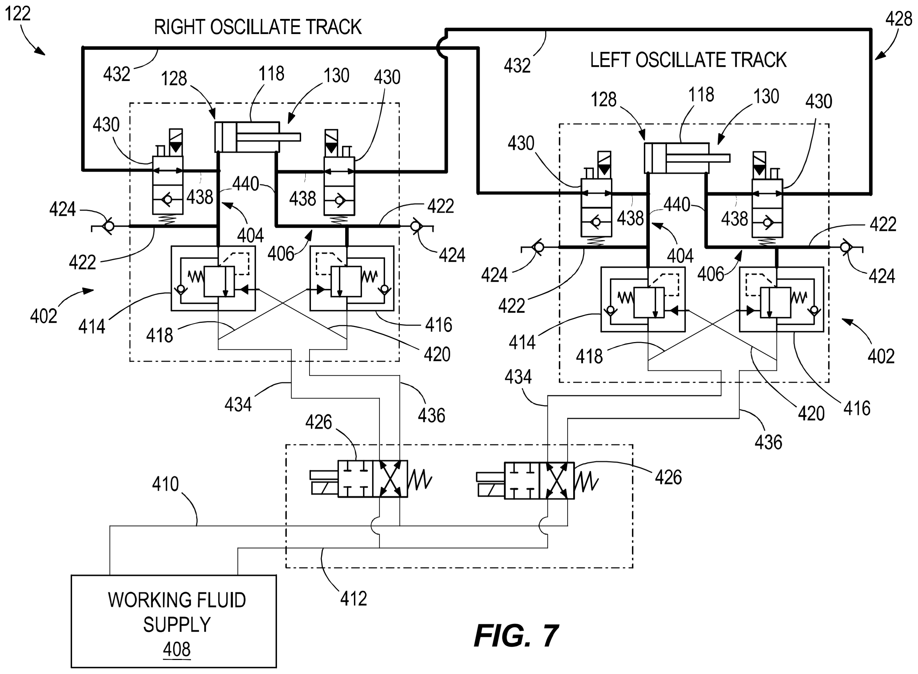

FIG. 7 depicts an example of flow of the working fluid through the fluid circuit 122 when both actuators 118 (e.g., hydraulic cylinders) are in a floating state. In this example, the floating valves 430 are open to allow the working fluid trapped in the actuators 118 to flow through the floating sub-circuit 428. For example, during a tram operating mode of the machine 100, the actuators may independently extend and/or retract depending on the conditions of the terrain traversed by the machine. The actuators 118 are interconnected via the floating sub-circuit 428 and the trapped working fluid can oscillate therebetween to float the actuators and maintain the crawlers 108 on the ground. For example, if during travel of the machine 100 one of the actuators 118 extends when the corresponding crawler 108 experiences a drop in elevation of the ground that is not experienced by the other crawler, the working fluid can be driven toward the second end 130 of the other actuator, which retracts the other actuator thereby moving the other crawler to compensate for the uneven elevation. Similarly, if during travel of the machine 100 one of the actuators 118 retracts when the corresponding crawler 108 experiences a rise in elevation of the ground that is not experienced by the other crawler, the working fluid can be driven toward the first end 128 of the other actuator, which extends the other actuator thereby moving the other crawler to compensate for the uneven elevation. The holding valves 414, 416 of the hard plumbed sub-circuits 402 are closed, unless excessive pressure is present in the hard plumbed sub-circuit, to maintain the level of the working fluid between the actuators 118 in the floating state. In the event of over-pressurization in a hard-plumbed sub-circuit 402 during the floating state, working fluid can be relieved or bleed off through one or both holding valves 414, 416 as described above. In some embodiments, the control valves 426 may be open to allow relieving or bleeding off the working fluid through the holding valves 414, 416 back toward the working fluid supply 408.

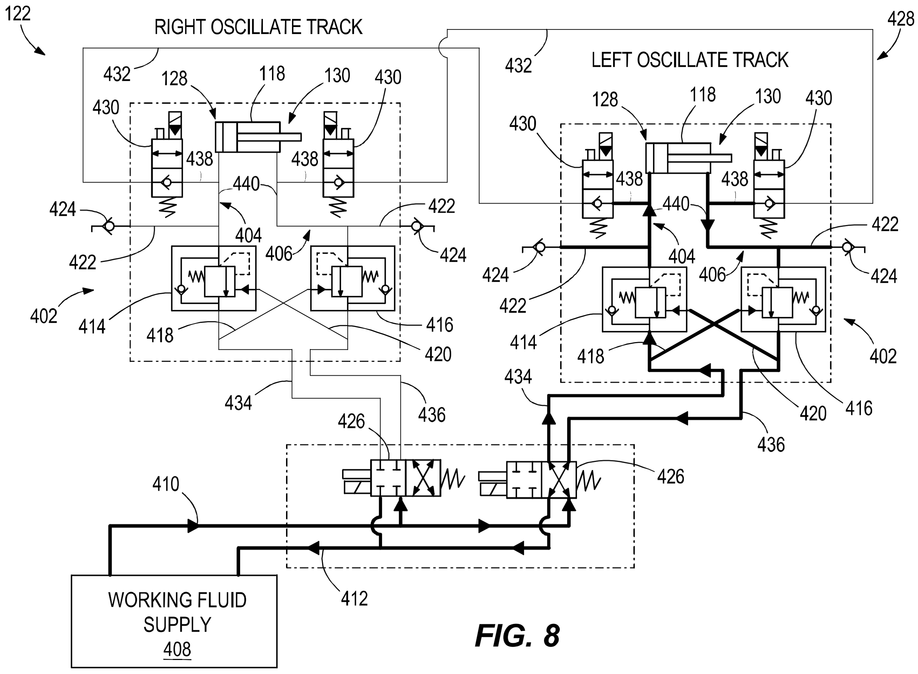

FIG. 8 depicts an example of flow of the working fluid through the fluid circuit 122 when only one of the actuators 118 (e.g., hydraulic cylinders) is extended. The working fluid flows through the intermediate lines 434, 436 and the hard plumbed sub-circuit 402 corresponding to the actuator 118 being extended as described above for FIG. 5. The control valve 426 upstream from the other hard plumbed sub-circuit 402 is closed, restricting flow of the working fluid in the other intermediate lines 434, 436 and the other hard plumbed sub-circuit. The floating valves 430 are also closed to restrict flow of the working fluid through the floating sub-circuit 428.

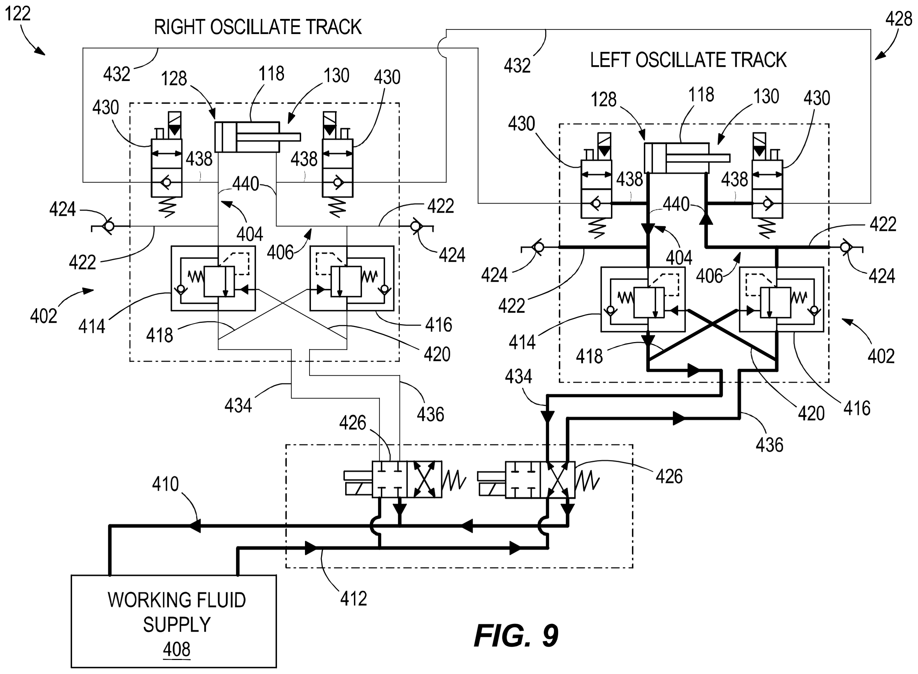

FIG. 9 depicts an example of flow of the working fluid through the fluid circuit 122 when only one of the actuators 118 (e.g., hydraulic cylinders) is retracted. The working fluid flows through the intermediate lines 434, 436 and the hard plumbed sub-circuit 402 corresponding to the actuator 118 being retracted as described above for FIG. 6. The control valve 426 upstream from the other hard plumbed sub-circuit 402 is closed, restricting flow of the working fluid in the other intermediate lines 434, 436 and the other hard plumbed sub-circuit. The floating valves 430 are also closed to restrict flow of the working fluid through the floating sub-circuit 428.

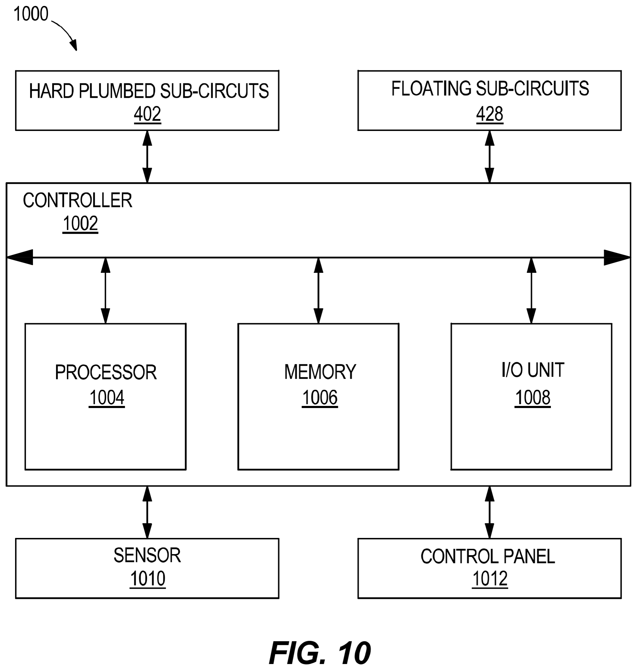

Turning now to FIG. 10, a schematic diagram 1000 of one embodiment of a controller 1002 communicating with components of the fluid circuit 122 is shown. The controller 1002 can be incorporated in the hydraulic system 116 and/or the mobile machine 100 described above. In this embodiment, the controller 1002 includes a processing unit or processor 1004, a memory 1006, and an input output (I/O) unit 1008. The processing unit 1004 can be, for example, a microprocessor, an application-specific integrated circuit ("ASIC"), or another suitable electronic device. The memory 1006 (for example, one or more non-transitory computer-readable storage mediums), may also include data storage of any suitable type. The controller 1002, via the processing unit 1004, the memory 1006, and the I/O unit 1008, may communicate to external devices over one or more data connections or buses, or a combination thereof.

The controller 1002 depicted in FIG. 10 represents one example, and, in some embodiments, the controller 1002 can include fewer, additional, or different components in different configurations than shown in FIG. 10. Also, in some embodiments, the controller 1002 may include functionality in addition to the functionality described herein without departing from the principles of this disclosure.

The I/O unit 1008 allows the controller 1002 with devices and components of the hydraulic system and/or mobile machine that may be external to or remote from the controller 1002. For example, the controller 1002 may communicate with one or more sensor(s) 1010 and/or a control panel 1012. In some embodiments, the sensor(s) 1010 can be operable to detect an operating mode of the mobile machine, and may include accelerometers, gyroscopes, and the like. In some embodiments, the control panel 1012 may allow the operator of the mobile machine to input commands or requests that can be executed by the controller 1002.

The I/O unit 1008 may include ports for receiving a wired connection to an external device (for example, a universal serial bus ("USB") cable and the like), a transceiver for establishing a wireless connection to an external device (for example, over one or more communication networks, such as the internet, LAN, a WAN, and the like), or any suitable combination thereof without departing from the principles of this disclosure.

In some embodiments, the controller 1002 can receive signals or data from one or more components of the hydraulic system and/or the mobile machine and execute functions in response to the received signals or data. For example, the controller 1002 can receive a signal indicative of an operating mode of the mobile machine, such as a tram operating mode or a working operating mode (e.g., a drilling operating mode). Additional data or signals can be received, processed, discerned, and/or determined by the controller 1002 without departing from the principles of this disclosure.

The data received by the controller 1002 may be stored in the memory 1006, e.g., in the data storage, and can be accessed by the processing unit 1004 for making one or more determinations and/or generating one or more outputs for controlling components of the hydraulic system and/or mobile machine. The processing unit 1004 may also access and execute computer-readable instructions ("software") stored in the memory 1006 that configure the processing unit 1006 to perform one or more control functions. For example, the processing unit 1004 can access the memory 1006 and, based on signals received, control operation of the hard plumbed sub-circuits 402 and/or the floating sub-circuit 428. In some embodiments, the processing unit 1004 may control operation of the working fluid supply 408 and/or the control valves 426 of the hard plumbed sub-systems 402. In some embodiments, the processing unit 1004 may control operation of the floating valves 430 of the floating sub-circuit 428. For example, the processing unit 1004 may control operation of the working fluid supply 408, the control valves 426 and/or the floating valves 430 to direct the working fluid to flow through the fluid circuit as described above for any one or more of FIGS. 5-9. The software stored in the memory 1006 can include firmware, one or more applications, program data, filters, rules, one or more program modules, and other executable instructions. In certain embodiments, the software may include instructions and associated data for performing a set of functions, including those described herein.

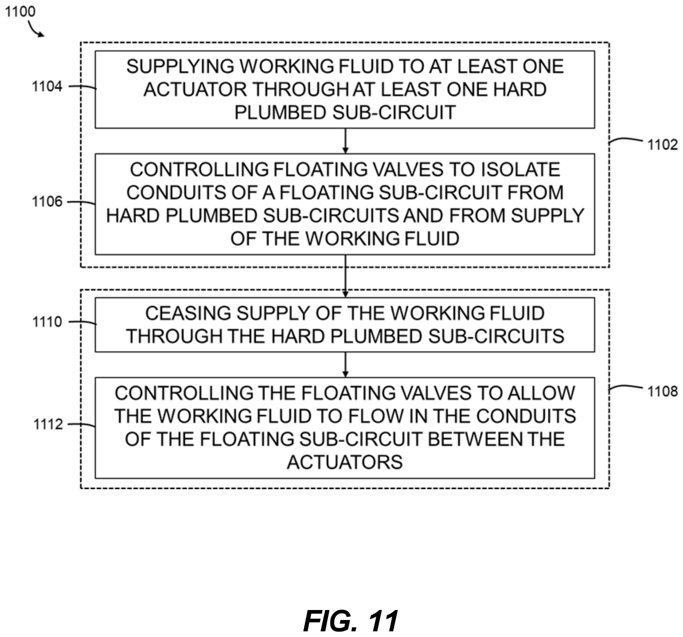

Turning now to FIG. 11, a method 1100 of operating a hydraulic system (e.g., the hydraulic system 116) for a mobile machine (e.g., the machine 100) is provided. In some embodiments, the mobile machine includes crawlers (e.g., the crawlers 108) for moving the machine. In some embodiments, the hydraulic system operated via the method 1110 includes actuators (e.g., the actuators 118) operably coupled to the crawlers and a fluid circuit (e.g., the fluid circuit 122) connected to the actuators. In some embodiments, the fluid circuit includes hard plumbed sub-circuits (e.g., the hard plumbed sub-circuits 402) connected to the actuators and a floating sub-circuit (e.g., the floating sub-circuit 428) interconnecting the actuators. In some embodiments, the floating sub-circuit can be isolated from the hard plumbed sub-circuit using floating valves (e.g., the floating valves 430) and, as such, the floating sub-circuit may include flexible lines or conduits connected between the floating valves.

The method 1110 includes operations that are performed in a first operating mode of the machine and operations that are performed in a second operating mode of the machine. Examples of operations that may be performed in the first operating mode are shown in the box 1102 of FIG. 11. In some embodiments, the first operating mode 1102 includes a working operating mode (e.g., a drilling operating mode) in which the machine may be stationary. Examples of operations that may be performed in the second operating mode are shown in the box 1108 of FIG. 11. In some embodiments, the second operating mode 1108 includes a tram operating mode in which the machine may be moving over terrain. More, fewer, or alternative operations, including any operations described herein, can be performed in the first operating mode 1102 and/or the second operating mode 1108. In some embodiments, one or more operations of the method 1110 may be controlled via a controller (e.g., the controller 1002).

In the first operating mode 1102 of the machine, the method 1100 can include supplying 1104 working fluid to at least one of the actuators through at least one of the hard plumbed sub-circuits connected to the at least one of the actuators. The working fluid supplied 1104 to the actuators can cause movement of the at least one actuator and at least one crawler coupled to the at least one actuator in a desired direction as described above. The method 1100 also includes controlling 1106 the floating valves of the floating sub-circuit to isolate conduits of the floating sub-circuit from the hard plumbed sub-circuits and from the working fluid being supplied to the at least one of the actuators. In this way, the floating sub-circuit can be isolated during the first operating mode in which holding valves (e.g., the holding valves 414, 416) of the hard plumbed sub-circuits may be used to counterbalance loads on the actuators. This may allow the floating sub-circuit to be equipped with flexible lines or conduits since the floating valves break connection between the floating sub-circuit, the holding valves, and the actuators.

In the second operating mode 1108 of the machine, the method 1100 includes ceasing 1110 supply of the working fluid through the hard plumbed sub-circuits. For example, during a tram operating mode in which the machine moves across terrain, exerting force to cause movement of the crawlers via the actuators may not be necessary or desired and so the supply of the working fluid to the actuators can be terminated. The method 1100 also includes controlling 1112 the floating valves to allow the working fluid in the fluid circuit to flow in the conduits of the floating sub-circuit between the actuators. This allows the actuators to float during the second operating mode 1108, which may be desirable as the machine moves across uneven terrain.

The configurations of the embodiments described above can be incorporated in any combination. In other embodiments, other configurations are possible. For example, those of skill in the art will recognize, according to the principles and concepts disclosed herein, that various combinations, sub-combinations, and substitutions of the components discussed above can provide a system incorporating aspects and principles of the present disclosure.

The embodiment(s) described above and illustrated in the figures are presented by way of example only and are not intended as a limitation upon the concepts and principles of the present disclosure. As such, it will be appreciated that variations and modifications to the elements and their configuration and/or arrangement exist within the spirit and scope of one or more independent aspects as described.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A mobile machine comprising:
a frame (104);
a plurality of crawlers (108) coupled to the frame (104);
a plurality of actuators (118) operably coupled to the plurality of crawlers (108); and
a fluid circuit (122) configured to supply a working fluid to each actuator of the plurality of actuators (118), wherein the fluid circuit (122) comprises:
a plurality of hard plumbed sub-circuits (402) connected to the plurality of actuators (118) to allow flow of the working fluid to and from the plurality of actuators (118); and
a floating sub-circuit (428) interconnecting the plurality of actuators (118), the floating sub-circuit (428) allowing the working fluid to flow between the plurality of actuators (118), wherein the floating sub-circuit (428) includes floating valves (430) that control the flow of the working fluid in the floating sub-circuit (428) independent of the flow of the working fluid in the plurality of hard plumbed sub-circuits (402).

2. The mobile machine of claim 1, wherein the floating valves are controllable to isolate the floating sub-circuit from the plurality of hard plumbed sub-circuits.

3. The mobile machine of claim 1 or claim 2, wherein each actuator of the plurality of actuators includes a first end and a second end, and wherein, for each actuator, the first and second ends are each connected to the floating sub-circuit.

4. The mobile machine of claim 3, wherein each hard plumbed sub-circuit of the plurality of hard plumbed sub-circuits includes a first hard pipeline connected to the first end of an actuator of the plurality of actuators and a second hard pipeline connected to the second end of the actuator.

5. The mobile machine of claim 4, wherein, for each hard plumbed sub-circuit of the plurality of hard plumbed sub-circuits, the first hard pipeline is connected to a first holding valve and the second hard pipeline is connected to a second holding valve.

6. The mobile machine of claim 4 or claim 5, wherein, for each hard plumbed sub-circuit of the plurality of hard plumbed sub-circuits, the first hard pipeline is connected one of the floating valves and the second hard pipeline is connected to another one of the floating valves.

7. The mobile machine of any preceding claim, further comprising a plurality of control valves upstream from the plurality of hard plumbed sub-circuits, the plurality of control valves being operable to independently control flow of the working fluid to and from the plurality of hard-plumbed sub-circuits.

8. The mobile machine of any preceding claim, further comprising a controller operable to control the floating valves based on an operating mode of the machine.

9. The mobile machine of claim 8, wherein the controller is operable to:
control the floating valves to allow the working fluid to flow in the floating sub-circuit when the machine is in a tram operating mode; and
control the floating valves to isolate the floating sub-circuit during a working operating mode.

10. A hydraulic system for a machine including a frame and crawlers coupled to the frame, the hydraulic system comprising:
a plurality actuators configured to be operably coupled to the crawlers; and
a fluid circuit configured to supply a working fluid to the plurality of actuators, wherein the fluid circuit comprises:
a plurality of hard plumbed sub-circuits connected to the plurality of actuators to allow flow of the working fluid to and from the plurality of actuators; and
a floating sub-circuit interconnecting the plurality of actuators, the floating sub-circuit allowing the working fluid to flow between the plurality of actuators, wherein the floating sub-circuit includes floating valves that control the flow of the working fluid in the floating sub-circuit independent of the flow of the working fluid in the plurality of hard plumbed sub-circuits.

11. The hydraulic system of claim 10, wherein each actuator of the plurality of actuators includes a first end and a second end, and wherein, for each actuator, the first and second ends are each connected to the floating sub-circuit.

12. The mobile machine of claim 3, and/or the hydraulic system of claim 11, wherein, for each actuator, one of the floating valves is positioned proximate the first end between a flexible line of the floating sub-circuit and a hard plumbed sub-circuit of the plurality of hard plumbed sub-circuits and another one of the floating valves is positioned proximate the second end between another flexible line of the floating sub-circuit and the hard plumbed sub-circuit.

13. The hydraulic system of claim 11 or claim 12, wherein:
each hard plumbed sub-circuit of the plurality of hard plumbed sub-circuits includes a first hard pipeline connected to the first end of an actuator of the plurality of actuators and a second hard pipeline connected to the second end of the actuator, and
wherein, for each hard plumbed sub-circuit, each of the first and second hard pipelines is connected to a holding valve.

14. A fluid circuit for supplying working fluid to actuators of a mobile machine that control movement of crawlers of the machine, the fluid circuit comprising:
a plurality of hard plumbed sub-circuits connectable to the actuators to allow flow of the working fluid to and from the actuators; and
a floating sub-circuit for interconnecting the actuators, the floating sub-circuit allowing the working fluid to flow between the actuators, wherein the floating sub-circuit includes floating valves that control the flow of the working fluid in the floating sub-circuit independent of the flow of the working fluid in the plurality of hard plumbed sub-circuits.

15. The mobile machine of claim 1, the hydraulic system of claim 10, and/or the fluid circuit of claim 14, wherein the floating sub-circuit includes flexible lines connected between the floating valves.

16. The fluid circuit of claim 14 or claim 15, wherein each hard plumbed sub-circuit of the plurality of hard plumbed sub-circuits includes a first hard pipeline and a second hard pipeline, and wherein, for each hard plumbed sub-circuit, the first and second hard pipelines are connectable to one of the actuators.

17. The fluid circuit of any one of claims 14 to 16, wherein, for each hard plumbed sub-circuit, each of the first and second hard pipelines is connected to a holding valve.

18. A method of operating a hydraulic system for a mobile machine including crawlers for moving the machine, the hydraulic system including actuators operably coupled to the crawlers and a fluid circuit connected to the actuators, the fluid circuit including hard plumbed sub-circuits connected to the actuators and a floating sub-circuit interconnecting the actuators, the method comprising:
in a first operating mode of the machine:
supplying working fluid to at least one of the actuators through at least one of the hard plumbed sub-circuits connected to the at least one of the actuators; and
controlling floating valves of the floating sub-circuit to isolate conduits of the floating sub-circuit from the hard plumbed sub-circuits and from the working fluid being supplied to the at least one of the actuators; and
in a second operating mode of the machine:
ceasing supply of the working fluid through the hard plumbed sub-circuits; and
controlling the floating valves to allow the working fluid in the fluid circuit to flow in the conduits of the floating sub-circuit between the actuators.
